# FASCICULE DE BREVET EUROPEEN

(11) **EP 0 836 001 B1**
(45) Date de publication et mention de la délivrance du brevet: **16.04.2003**
(21) Numéro de dépôt: 97402363.2
(22) Date de dépôt: 08.10.1997
(51) Int. Cl.: F02K 9/97

(54) **Tuyère de moteur-fusée à inserts éjectables**
Raketendüse mit abwerfbarem Einsatz
Rocket nozzle with ejectable inserts

(30) Priorité: 11.10.1996 FR 9612429
(43) Date de publication de la demande: 15.04.1998
(73) Titulaire: SOCIETE NATIONALE D'ETUDE ET DE CONSTRUCTION DE MOTEURS D'AVIATION, "S.N.E.C.M.A.", F-75724 Paris Cédex 15 (FR)
(72) Inventeur: Gastal, Joseph B., 92100 Boulogne-Billancourt (FR)
(74) Mandataire: Thévenet, Jean-Bruno

(56) Documents cités:
- FR-A- 2 503 794
- FR-A- 2 705 738
- FR-A- 2 724 979
- US-A- 3 237 402
- US-A- 3 776 466

## Description

La présente invention a pour objet une tuyère de moteur-fusée, en particulier pour premier étage de lanceur, comprenant une partie convergente recevant les gaz chauds produits dans une chambre de combustion, un col de tuyère de section réduite et un divergent raccordé au col de tuyère et se terminant à sa partie aval par une section de sortie des gaz définissant un rapport de section élevé, le divergent comprenant un divergent externe relié au col de tuyère et au moins un divergent interne dont la section de sortie est inférieure à celle du divergent externe et qui est emboîté dans le divergent externe et connecté à celui-ci par des moyens de liaison associés à des moyens de destruction sélective desdits moyens de liaison pour permettre une séparation et un largage du divergent interne à un instant prédéterminé du fonctionnement de la chambre de combustion correspondant à une altitude prédéterminée du moteur-fusée.

### Art antérieur

On a déjà proposé diverses solutions en vue de modifier la géométrie d'un divergent de tuyère de moteur-fusée pour premier étage de lanceur, afin de réaliser l'adaptation du divergent aux conditions ambiantes variables du vol.

On sait en effet que l'adaptation rigoureuse d'une tuyère ne peut être obtenue, pour un régime donné, qu'à une seule altitude correspondant à une pression ambiante déterminée. Les tuyères sont généralement optimisées en fonction des performances globales de l'étage, ce qui conduit la plupart du temps à des tuyères surdétendues dont la poussée sera maximale à une altitude relativement élevée dite d'adaptation. A l'altitude d'adaptation, la pression statique des gaz Pe dans la section de sortie de la tuyère devient sensiblement égale à la pression ambiante Pa qui est relativement faible. L'altitude d'adaptation peut être située par exemple à une dizaine de kilomètres du sol. Pour toute la phase du vol depuis le sol jusqu'à l'altitude d'adaptation, la pression statique des gaz Pe dans la section de sortie de la tuyère est très sensiblement inférieure à la pression ambiante. Dans cette phase pendant laquelle la tuyère est surdétendue, et notamment au démarrage où la pression ambiante Pa correspond à la pression atmosphérique au niveau du sol, il se produit un phénomène de décollement du jet par rapport à la paroi du divergent, qui entraîne des instabilités du jet et des perturbations (vibrations, couplage aéroélastique, efforts latéraux) qui limitent, au niveau conception, l'accroissement de la performance par le seul rapport de section.

Afin d'éviter le phénomène de décollement de jet, on a déjà proposé, notamment dans les documents FR-A-2 568 316 et FR-A-2457390, de réaliser des tuyères à géométrie variable comprenant un premier divergent de relativement faible longueur et faible section de sortie, utilisé dans une première phase de vol à partir du sol, et un ou plusieurs tronçons de divergent qui viennent se raccorder au premier divergent, en aval de celui-ci pour le prolonger en créant une section de sortie plus grande lorsque le moteur-fusée a atteint une certaine altitude pour laquelle la pression ambiante est réduite. De tels types de tuyères à divergent déployable permettent d'améliorer l'adaptation du moteur-fusée à différentes phases du vol, mais impliquent également un accroissement de la complexité de réalisation, du coût et de la masse embarquée et ne garantissent pas toujours une sécurité de fonctionnement suffisante compte tenu de la fragilité des mécanismes de déploiement et de la difficulté à réaliser un alignement correct des différents tronçons de divergent en présence des charges de recollement du jet sur les tronçons.

L'utilisation, sur un moteur-fusée, d'un divergent déployable présente aussi, en dehors des problèmes liés au système de déploiement proprement dit, des contraintes au niveau de l'architecture moteur.

Il est encore connu, notamment par les documents US-A-3 925 982 ou FR-A-2 618 488, d'utiliser un divergent à rapport de section fixe, dont la section de sortie relativement importante optimise le fonctionnement en altitude dans un environnement à pression externe faible, et de mettre en oeuvre des moyens pour stabiliser, au démarrage et dans une première phase de vol à faible altitude, le décollement du jet de gaz par rapport à la paroi du divergent, à une distance déterminée de la section de sortie. On a toutefois jusqu'à présent proposé de stabiliser le décollement de jet essentiellement à l'aide d'une injection de fluide sous une forme d'anneau à travers la paroi du divergent. L'obligation d'utiliser un fluide et de commander son injection à l'intérieur du divergent accroît la complexité du système et tend à diminuer sa fiabilité.

Il a encore été proposé, par exemple dans le document FR-A-2 503 794, d'utiliser au démarrrage et à basse altitude un divergent dont la section de sortie est réduite et qui est installé à l'intérieur d'un divergent présentant une plus grande section de sortie. Lorsque le moteur-fusée a atteint une altitude telle que le divergent de plus grande section de sortie peut fonctionner sans risque de décollement du jet, le divergent interne de section réduite est séparé et largué.

Un tel système d'adaptation d'une tuyère de moteur-fusée à insert à paroi mince raccordée à la paroi d'un divergent externe présente des difficultés de réalisation et de mise en oeuvre. En particulier, lors de l'éjection de l'insert à paroi mince, ce dernier a tendance à basculer et à se déporter latéralement, d'où un risque de choc sur le divergent externe et de perturbation du mouvement du lanceur. Dans une telle configuration, les pressions de l'écoulement entre divergent et insert transmettent des efforts importants à la structure du divergent, de sorte que celui-ci doit être renforcé et donc alourdi. Le lanceur devient alors moins performant.

### Objet et description succincte de l'invention

La présente invention vise à remédier aux inconvénients précités et à permettre une bonne adaptation d'une tuyère de moteur-fusée à différentes conditions de vol depuis le sol jusqu'à une altitude où la pression ambiante est réduite, sans qu'il soit mis en oeuvre de mécanisme de déploiement de pièces d'extension de divergent, ni de système d'injection de fluide, et en garantissant que la trajectoire du lanceur et sa stabilité ne sont pas affectées par les différentes évolutions de la géométrie de la tuyère.

L'invention vise en particulier à conférer à une tuyère de moteur-fusée un bon degré d'adaptabilité avec un rendement global satisfaisant tout en offrant une simplicité de fabrication et de fonctionnement.

L'invention vise encore à réduire les efforts latéraux sur la tuyère pendant l'amorçage de celle-ci.

Ces buts sont atteints grâce à une tuyère de moteur-fusée, en particulier pour premier étage de lanceur, comprenant une partie convergente recevant les gaz chauds produits dans une chambre de combustion, un col de tuyère de section réduite et un divergent raccordé au col de tuyère et se terminant à sa partie aval par une section de sortie des gaz définissant un rapport de section élevé, le divergent comprenant un divergent externe relié au col de tuyère et au moins un divergent interne dont la section de sortie est inférieure à celle du divergent externe et qui est emboîté dans le divergent externe et connecté à celui-ci par des moyens de liaison associés à des moyens de destruction sélective desdits moyens de liaison pour permettre une séparation et un largage du divergent interne à un instant prédéterminé du fonctionnement de la chambre de combustion correspondant à une altitude prédéterminée du moteur-fusée, le divergent interne comprenant au moins un premier insert disposé à l'intérieur du divergent externe de façon concentrique à celui-ci et de manière à rigidifier le divergent externe lors des phases transitoires de démarrage ou d'éjection du divergent interne, caractérisée en ce que ledit premier insert comprend un matériau alvéolaire de remplissage associé à une structure de rigidification et à un matériau réfractaire définissant la paroi interne dudit premier insert soumise aux gaz chauds produits dans la chambre de combustion, de telle sorte que la densité moyenne dudit premier insert soit comprise entre environ 0,2 et 0,4, en ce que des moyens de limitation de pression sont interposés entre ledit premier insert et le divergent externe pour limiter les efforts transmis au divergent externe et en ce que ledit premier insert est fixé au divergent externe par des moyens de fixation rigides associés à des moyens de découpe sélective.

La tuyère objet de la présente invention permet d'accroître la performance des étages d'un lanceur qui a démarré au niveau du sol, ou dans les couches basses de l'atmosphère, et doit fonctionner dans le vide spatial.

La tuyère selon l'invention peut comprendre un divergent externe classique constitué d'une coque mince, qui est optimisé pour le vide jusqu'au rapport de section ε maximum déterminé par la valeur d'échange masse-poussée de l'étage considéré.

Lors du fonctionnement au sol ou dans les couches denses de l'atmosphère, le système de divergent interne à inserts permet d'adapter le rapport de section à une valeur qui réduit les efforts latéraux à l'amorçage et élimine tout effet perturbateur dû au décollement de jet.

Grâce à la présence d'un divergent interne comprenant au moins un insert interne de faible densité assurant un renfort dans la phase de vol atmosphérique, le divergent externe peut conserver la forme d'une structure mince, ce qui contribue à assurer un gain de masse pour le fonctionnement dans le vide.

La fonction de limitation de pression, qui peut être réalisée par une fonction d'étanchéité plus ou moins parfaite, empêche la pression amont de s'établir entre les inserts internes et la paroi du divergent externe, ce qui conduit à limiter les efforts transmis à la coque du divergent externe et à minimiser la masse de l'ensemble de la structure.

L'invention, par sa conception modulaire, est applicable en particulier à des moteurs existants dont on veut améliorer les performances.

Le premier insert peut comprendre une paroi interne cylindrique ou profilée.

Selon un mode de réalisation particulier de l'invention, qui permet d'accroître l'optimisation de la tuyère, le divergent interne comprend un ensemble de plusieurs inserts concentriques éjectables, chaque insert comprenant un matériau alvéolaire de remplissage associé à une structure de rigidification et à un matériau réfractaire définissant la paroi interne de chaque insert soumise aux gaz chauds produits dans la chambre de combustion, de telle sorte que la densité moyenne de chaque insert soit comprise entre environ 0,2 et 0,4, les différents inserts sont reliés entre eux par des moyens de fixation rigides associés à des moyens de découpe sélective, des moyens de limitation de pression sont interposés entre chaque insert et le divergent externe pour limiter les efforts transmis au divergent externe et les parois en regard l'une de l'autre de deux inserts concentriques adjacents comportent des portions essentiellement cylindriques qui sont séparées l'une de l'autre par un jeu annulaire dans lequel sont disposées au moins trois glissières longitudinales permettant un glissement de l'insert interne par rapport à l'insert externe adjacent sans risque de coincement.

Chacun des inserts concentriques éjectables présente une paroi interne essentiellement cylindrique.

Les inserts emboîtés les uns dans les autres de façon concentrique sont éjectés séquentiellement au cours du vol soit de façon graduée pour adapter progressivement la tuyère à l'altitude et optimiser la performance, soit de façon quasi instantanée, par exemple toutes les 500 millisecondes, dès que le divergent peut fonctionner sans risque de décollement.

Le nombre d'inserts, qui peut être supérieur à deux, est déterminé en fonction des adaptations de rapport de section jugées rentables par une comparaison entre le coût et les performances, et de la nécessité de maîtriser l'éjection de chaque pièce. Un guidage cylindrique minimal est en effet nécessaire, et la hauteur limitée du dernier insert éjecté est déterminée par la prévention du risque de basculement.

Comme dans le cas d'un divergent interne à insert unique, les inserts multiples agencés de façon concentrique participent à la rigidification du divergent externe lors des phases transitoires de démarrage ou d'éjection, ce qui permet de réduire la masse de ce divergent externe pour le fonctionnement dans le vide.

La géométrie de la veine interne constituée par la forme et l'agencement des inserts autorise un fonctionnement aérodynamique stable et connu aussi bien lors de l'allumage au sol que lors des phases d'éjection successives tout en simplifiant la fabrication. De ce fait, il n'est pas nécessaire de faire appel, pour la mise au point et la qualification, à des installations de simulation d'altitude coûteuses.

On notera que les mécanismes de séparation et d'éjection des inserts sont qualifiables sur des installations à échelle réduite ou en condition au niveau du sol, puisque ces mécanismes sont découplés de l'ensemble du moteur et calculables de façon séparée.

Le dispositif anti-coincement et de guidage mis en oeuvre dans le cadre de la présente invention évite les perturbations tels que des chocs ou des basculements des inserts, qui pourraient apparaître lors des éjections sous l'effet de la pression amont. Par ailleurs, dès lors qu'ils sont liés entre eux de façon rigide, les inserts peuvent résister à l'ambiance vibratoire très élevée régnant dans les moteurs de forte puissance.

Des dispositifs pyrotechniques de séparation ou découpe et d'initiation permettent d'effectuer la séparation des inserts éjectables et l'initiation de leur mouvement, les inserts étant ensuite naturellement éjectés par la pression amont.

Selon un mode particulier de réalisation, le divergent interne comprend en outre un insert auxiliaire qui est concentrique à l'insert le plus interne, est disposé à l'intérieur de cet insert le plus interne en étant relié à celui-ci par des moyens de fixation rigides associés à des moyens de découpe sélective, l'insert auxiliaire comprend un matériau alvéolaire de remplissage associé à une structure de rigidification et à un matériau réfractaire définissant la paroi interne profilée de l'insert auxiliaire soumise aux gaz chauds produits dans la chambre de combustion, de telle sorte que la densité moyenne de l'insert auxiliaire soit comprise entre environ 0,2 et 0,4, des moyens de limitation de pression sont interposés entre l'insert auxiliaire et le divergent externe, les parois en regard l'une de l'autre de l'insert le plus interne et de l'insert auxiliaire comportent des portions essentiellement cylindriques qui sont séparées l'une de l'autre par un jeu annulaire dans lequel sont disposées au moins trois glissières longitudinales permettant un glissement de l'insert auxiliaire par rapport à l'insert le plus interne sans risque de coincement, et l'insert auxiliaire ne s'étend que sur une fraction supérieure de la paroi interne de l'insert le plus interne.

L'insert auxiliaire permet de profiler la paroi interne initiale pour optimiser la performance au maximum en améliorant la continuité avec le col de tuyère.

Lorsque l'ensemble des inserts est en place, ils délimitent un profil interne évolutif permettant d'améliorer les qualités de l'écoulement des gaz éjectés. Grâce à la forme toroïdale de ces inserts et à la présence de glissières de guidage, la fabrication est simplifiée, la rigidité mécanique est accrue et aucune perturbation n'est causée par l'éjection d'un insert. L'emboîtement cylindrique des inserts associé à la présence d'un petit nombre de glissières de guidage constituant un dispositif anti-coincement avec le jeu entre les inserts contribuent à éviter tout basculement ou déport d'un insert lors de son éjection et garantissent par là-même que le divergent externe ne sera pas endommagé.

Les moyens de limitation de pression peuvent être réalisés de différentes façons correspondant à différentes variantes de réalisation.

Selon une première variante, les moyens de limitation de pression comprennent un tapis de feutre de carbone permettant d'absorber les déformations radiales du divergent externe et du divergent interne en fonctionnement.

Selon une deuxième variante, les moyens de limitation de pression comprennent un tapis élastomère souple muni de rainures sur sa face tournée vers le divergent externe.

Selon une troisième variante, les moyens de limitation de pression comprennent au moins un joint torique élastomère de type silicone.

Selon une quatrième variante, les moyens de limitation de pression comprennent des joints en forme de segments de piston partiellement étanches pour créer des pertes de charge et assurer un rattrapage de jeu.

A titre d'exemple, le matériau alvéolaire de remplissage comprend des matériaux composites présentant une structure alvéolaire en nid d'abeille ou sous la forme d'une résine chargée de microballons.

Le matériau réfractaire comprend un matériau choisi parmi la silice phénolique, le carbone phénolique, un composite carbone-carbone et un composite carbone-carbure de silicium, en fonction de la durée d'exposition aux gaz chauds produits dans la chambre de combustion.

Avantageusement, la tuyère comprend des moyens de commande électrique centralisés pour déclencher lesdits moyens de découpe sélective et des relais pyrotechniques temporisateurs associés auxdits moyens de découpe sélective pour provoquer l'éjection en cascade des inserts à partir de l'insert le plus interne ou, le cas échéant, de l'insert auxiliaire.

Selon un mode particulier de réalisation, le premier insert présente à sa partie inférieure une plaque rigide définissant une bride périphérique de raccordement à une bride correspondante réalisée à la partie périphérique inférieure du divergent externe et des moyens pyrotechniques sont prévus pour provoquer de façon sélective la rupture des moyens de liaison desdites brides.

Selon une caractéristique particulière, des moyens de liaison comprennent des vis explosives à charges pyrotechniques reliant entre eux des inserts adjacents.

Selon une autre caractéristique particulière, certains au moins des moyens de liaison associés à des moyens de destruction sélective desdits moyens de liaison comprennent des charges pyrotechniques disposées dans des cavités ménagées dans les inserts au voisinage du divergent externe pour générer des gaz de chaleur modérée pour assurer, lors de leur mise à feu, un décollement des inserts par rapport au divergent externe.

Selon un mode particulier de réalisation, au moins un insert comprend un moyen escamotable dont le déploiement est assuré pyrotechniquement ou par des ressorts libérés par l'intermédiaire de dispositifs de séparation pyrotechniques, de telle sorte que le moyen escamotable puisse se projeter sélectivement en saillie transversalement dans le jet desdits gaz chauds issus de la chambre de combustion lors de l'éjection de cet insert de manière à faciliter l'extraction de celui-ci.

### Brève description des dessins

D'autres caractéristiques et avantages de l'invention ressortiront de la description suivante de modes particuliers de réalisation donnés à titre d'exemples, en référence aux dessins annexés, sur lesquels :
- la Figure 1 est une vue schématique en demi-coupe axiale d'un exemple de divergent d'une tuyère conforme à l'invention comportant deux inserts principaux et un insert additionnel ;
- la Figure 2 est une vue schématique en coupe axiale d'une tuyère de moteur-fusée comprenant un divergent équipé d'un ensemble d'inserts conformément à l'invention ;
- les Figures 3 et 4 sont des vues schématiques en demi-coupe axiale montrant deux étapes successives d'un exemple de processus d'éjection d'un insert interne ;
- la Figure 5 est une vue du divergent de la Figure 1, en section selon le plan V-V de la Figure 1, et montrant un exemple de dispositif anti-coincement placé entre deux inserts ;
- la Figure 6 est une vue de détail montrant des exemples de moyens de fixation et de découpe des inserts par rapport à l'élément externe du divergent ;
- les Figures 7 et 8 sont deux vues de détail montrant des exemples de fixation et de séparation de la partie périphérique inférieure d'un damier insert par rapport à l'élément externe du divergent ;
- la Figure 9 est une vue schématique en demi-coupe axiale d'un exemple de divergent d'une tuyère conforme à l'invention comportant un seul insert principal ;
- la Figure 10 est une vue de dessous, à échelle plus réduite, d'un divergent du type de celui représenté sur la Figure 9;
- la Figure 11 est une vue de détail en coupe montrant une variante de fixation par vis pyrotechnique du divergent de la Figure 9;
- la Figure 12 est une vue partielle, en demi-coupe axiale, d'un divergent selon l'invention qui incorpore un joint torique d'étanchéité entre un insert et le divergent externe ;
- la Figure 13 montre, dans une vue analogue à la Figure 12, une variante de réalisation dans laquelle un segment métallique élastique est substitué au joint d'étanchéité torique ;
- la Figure 14 montre, dans une vue analogue à celle de la Figure 12, une autre variante de réalisation mettant en oeuvre un tapis souple élastomère rainuré entre un insert et le divergent externe pour limiter la pression appliquée sur ce divergent externe ;
- la Figure 15 est une vue schématique en demi-coupe axiale d'un divergent d'une tuyère conforme à l'invention comportant deux inserts principaux équipés d'un dispositif de liaison séparable entre inserts qui est découplé des dispositifs d'éjection de ces inserts ;
- la Figure 16 est une vue schématique en demi-coupe axiale d'un divergent analogue à celui de la Figure 15, mais qui incorpore une variante de réalisation du dispositif de liaison séparable entre inserts et qui utilise des vis pyrotechniques,
- la Figure 17 est une vue schématique en demi-coupe axiale d'un autre exemple de divergent d'une tuyère conforme à l'invention comportant deux inserts principaux dont l'un est muni de moyens d'éjection d'insert comprenant un système de volet pivotant ;
- la Figure 18 est une vue éclatée en demi-coupe axiale montrant la structure d'inserts utilisables dans une tuyère conforme à l'invention ;
- la Figure 19 est une vue schématique en demi-coupe axiale d'un divergent d'une tuyère conforme à l'invention, équipé d'un système de rattrapage de déformations entre un insert et la coque du divergent externe,
- la Figure 20 est une vue schématique en demi-coupe axiale d'un mode de réalisation particulier d'un divergent d'une tuyère conforme à l'invention comportant deux inserts principaux avec un insert interne profilé.

### Description détaillée de modes particuliers de réalisation de l'invention

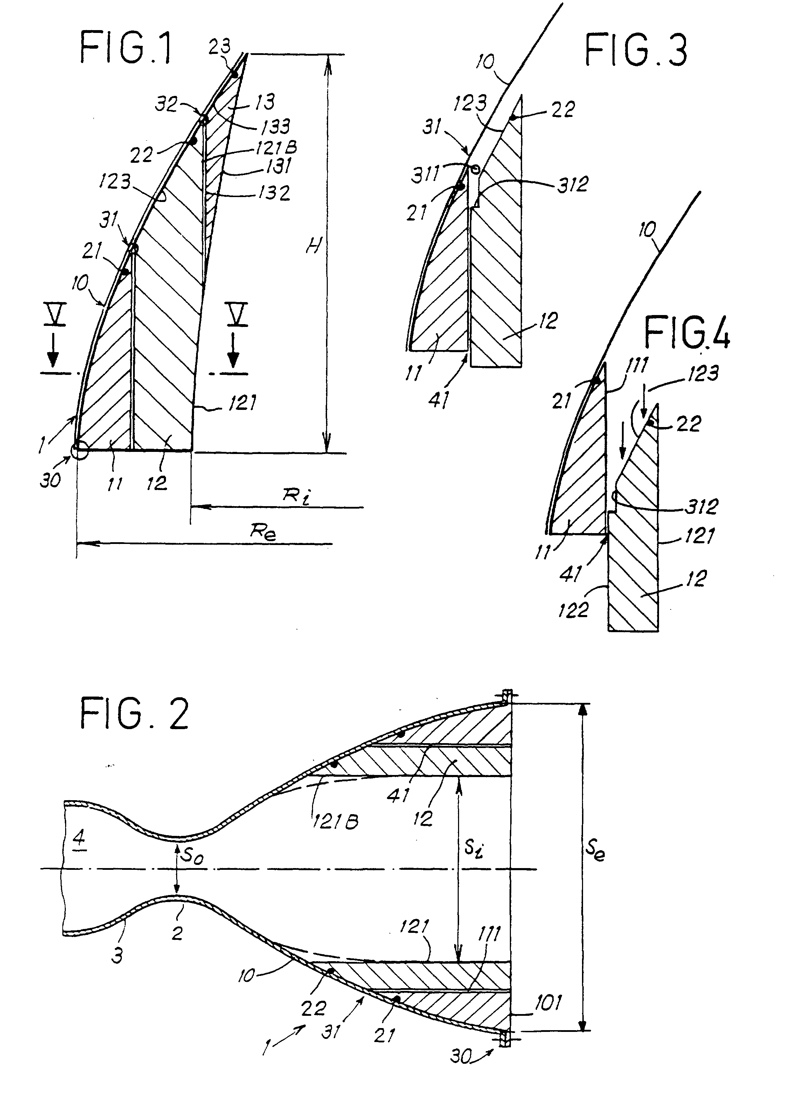

On a représenté sur la Figure 2, de façon schématique, une tuyère de moteur-fusée comprenant une partie convergente amont 3 recevant les gaz chauds produits dans une chambre de combustion 4, un col de tuyère 2 qui présente une section de passage So, et un divergent 10 qui assure la détente des gaz chauds en aval du col 2 et leur éjection au niveau de l'extrémité aval ouverte du divergent, qui présente une section de sortie Se, en l'absence d'inserts à l'intérieur du divergent 10.

Le rapport de section ε entre la section de sortie Se du divergent et la section So de passage des gaz chauds au niveau du col de tuyère 2 définit un taux de détente. Le rapport de détente de la tuyère 1 est en effet défini par le rapport entre la pression Po dans la chambre de combustion et la pression statique des gaz Pe dans la section de sortie de la tuyère, et le rapport de détente dépend directement du rapport de section ε.

On cherche en général à avoir un rapport de détente, donc un rapport de section ε, le plus grand possible afin d'obtenir une poussée importante.

Comme cela a déjà été indiqué, la poussée n'est cependant maximale que si la tuyère est adaptée, c'est-à-dire si la pression statique des gaz Pe dans la section de sortie de la tuyère est égale à la pression du milieu ambiant Pa.

Si la tuyère est adaptée pour un fonctionnement à haute altitude, avec une pression ambiante Pa très faible, la tuyère est surdétendue au niveau du sol où la pression statique Pe des gaz dans la section de sortie de la tuyère est très inférieure à la pression ambiante Pa qui est alors égale à 1 bar, et il se produit, avec les divergents traditionnels, un phénomène de décollement du jet des gaz chauds par rapport à la paroi du divergent 10. Ce phénomène de décollement du jet, par les dissymétries et instabilités des charges mécaniques qu'il provoque sur le divergent, peut conduire à des renforcements de structures qui accroissent la masse de ces structures de façon prohibitive.

C'est pourquoi on a déjà proposé soit de mettre en oeuvre des moyens assez complexes pour stabiliser le décollement du jet à l'aide de systèmes d'injection de gaz, soit, plus généralement, de limiter la longueur du divergent et sa section de sortie afin d'éviter, à basse altitude, le phénomène de décollement du jet. Ceci se traduit par une perte de poussée à haute altitude ou par l'obligation d'adjoindre, à haute altitude, des systèmes d'extension de tuyère qui compliquent fortement la structure de l'ensemble et la fragilisent.

La présente invention procède d'une démarche différente en assurant la réalisation d'une tuyère 1 de moteur-fusée d'un premier étage de lanceur qui, par son divergent externe classique 10, est optimisée pour un fonctionnement en altitude et peut présenter un rapport de section ε élevé (entre la section de sortie Se et la section du col So). Pour permettre un fonctionnement correct sans décollement de jet significatif au niveau du sol et à basse altitude, un ensemble d'inserts éjectables 11,12 sont disposés à l'intérieur du divergent externe 10 pour définir, au début d'une mission, une section de sortie Si définissant un rapport de section ε qui est alors égal au rapport entre la section de sortie Si et la section de passage So au niveau du col 2, de sorte que ce rapport de section ε initial est suffisamment faible et assure l'absence de décollement et d'efforts latéraux au sol. Le rapport de section ε initial peut ainsi présenter, au début d'une mission, une valeur telle qu'il évite un décollement du jet des gaz chauds à faible altitude et simultanément réduit les efforts latéraux lors du démarrage. A titre d'exemple, le rapport de section ε initial peut présenter une valeur d'environ 40 à 45 pour une pression chambre de 100 x 10⁵ Pa lorsque le divergent doit fonctionner au niveau du sol, et le rapport de section ε maximum déterminé par la valeur d'échange masse-poussée de l'étage considéré pour le fonctionnement du divergent dans le vide peut être de l'ordre de 95 à 100.

Les inserts élémentaires 13, 12, 11 sont éjectés successivement en cascade lorsque des altitudes prédéterminées sont atteintes, de sorte qu'à des altitudes élevées, par exemple au-delà de 10 kilomètres, la tuyère 1 ne comporte plus que le seul divergent externe 10 et peut retrouver un rapport de section ε élevé assurant une bonne adaptation et, par suite, un gain de poussée quand la pression ambiante est réduite.

Les inserts 13, 12, 11 sont éjectés de façon échelonnée sur déclenchement pyrotechnique. Il est à noter qu'une seule commande électrique peut suffire, des relais pyrotechniques temporisateurs assurant l'échelonnement dans le temps des éjections. Selon l'optimisation, les éjections échelonnées des inserts 13, 12, 11 peuvent être concentrées dans le temps, par exemple toutes les 500 millisecondes, ou effectuées de manière échelonnée. Le nombre d'inserts, la localisation de leur découpe pour l'éjection, leur géométrie et l'échelonnement de leur éjection sont adaptés en fonction du compromis souhaité entre la performance de l'engin, la simplicité de la fabrication et la limitation de la masse.

Les inserts 11, 12, 13 d'une tuyère selon l'invention sont toutefois réalisés de manière à éviter les inconvénients des solutions existantes mettant en oeuvre un petit divergent à paroi mince à l'intérieur d'un divergent de plus grande section.

Ainsi, selon un aspect de la présente invention, les inserts 11, 12, 13 coopèrent entre eux par un emboîtement cylindrique qui facilite le guidage lors de l'éjection et, grâce à un système de jeux et de glissières de guidage, tout risque de coincement est évité lors d'une éjection.

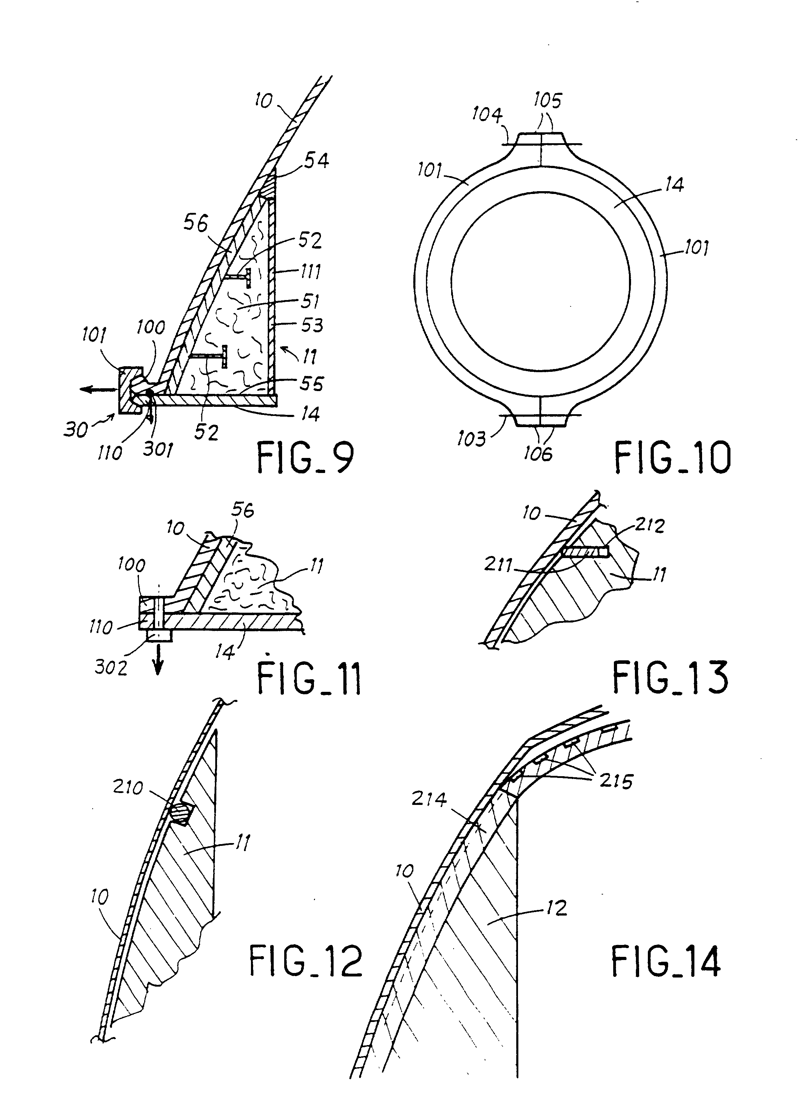

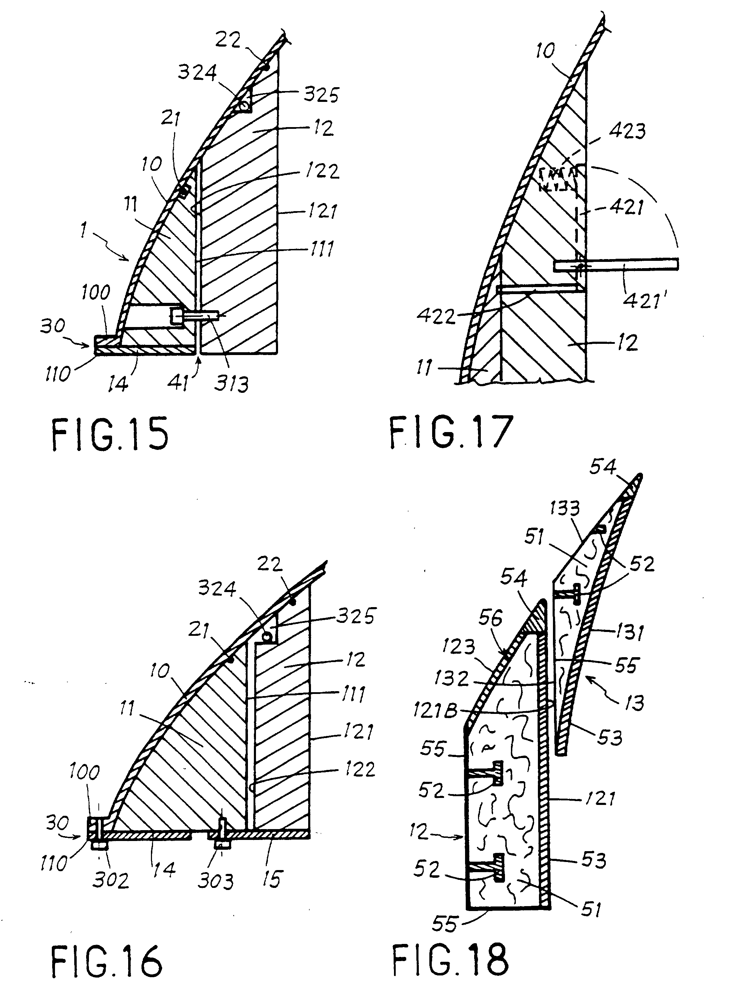

Afin de limiter la masse totale de la tuyère, les inserts 11, 12, 13 sont réalisés selon des structures permettant d'obtenir des densités de l'ordre de 0,2 à 0,4 et de préférence comprises entre 0,2 et 0,3. Ainsi, les inserts 11, 12, 13 peuvent comprendre un matériau alvéolaire de remplissage 51 constitué par des matériaux composites froids présentant une structure alvéolaire en nid d'abeille (par exemple en aluminium ou en matériau composite) ou constitués par une résine chargée de microballons. Le matériau alvéolaire de remplissage 51 est associé à une structure de rigidification 52, 55 (Figure 18). La structure de rigidification peut comprendre une coque 55 en tôle ou en matériau composite (par exemple en verre epoxy ou en carbone epoxy), ainsi que le cas échéant des raidisseurs de renfort 52, par exemple en métal ou matériau composite, qui permettent de maîtriser la déformation sous pression. Selon une option possible, les inserts peuvent être fabriqués en deux parties en tôles minces solidarisées ensuite par collage ou soudage. Les parois internes de ces inserts exposées à l'écoulement des gaz chauds peuvent elles-mêmes être réalisées en matériau réfractaire 53, par exemple de type silice phénolique, qui est suffisant pour résister à un contact avec les gaz chauds pendant une relativement faible durée, typiquement inférieure à 100 secondes, ou encore en un matériau de type carbone-carbure de silicium. L'extrémité supérieure 54 de chaque insert est également réalisée de préférence en matériau réfractaire. La Figure 18 montre des exemples de structure d'un insert interne 12 et d'un insert additionnel 13 tandis que la Figure 9 montre un exemple d'insert externe 11.

Les différents inserts 11, 12, 13 présentent une symétrie de révolution autour de l'axe de la tuyère et sont concentriques entre eux. Comme on peut le voir sur les Figures 1 à 4 et 15 à 17, les parois en regard l'une de l'autre de deux inserts adjacents 11, 12 ou 12, 13 comportent des portions essentiellement cylindriques. La paroi externe de l'insert externe 11 épouse la forme du divergent externe 10. La paroi externe 122 de l'insert interne 12 comprend une portion essentiellement cylindrique qui correspond à la paroi interne 111 de l'insert externe 11. L'insert interne 12 peut ainsi coulisser axialement par rapport à l'insert externe 11 comme montré sur les Figures 3 et 4, l'insert externe 11 servant alors de guide et de renfort du divergent externe 10.

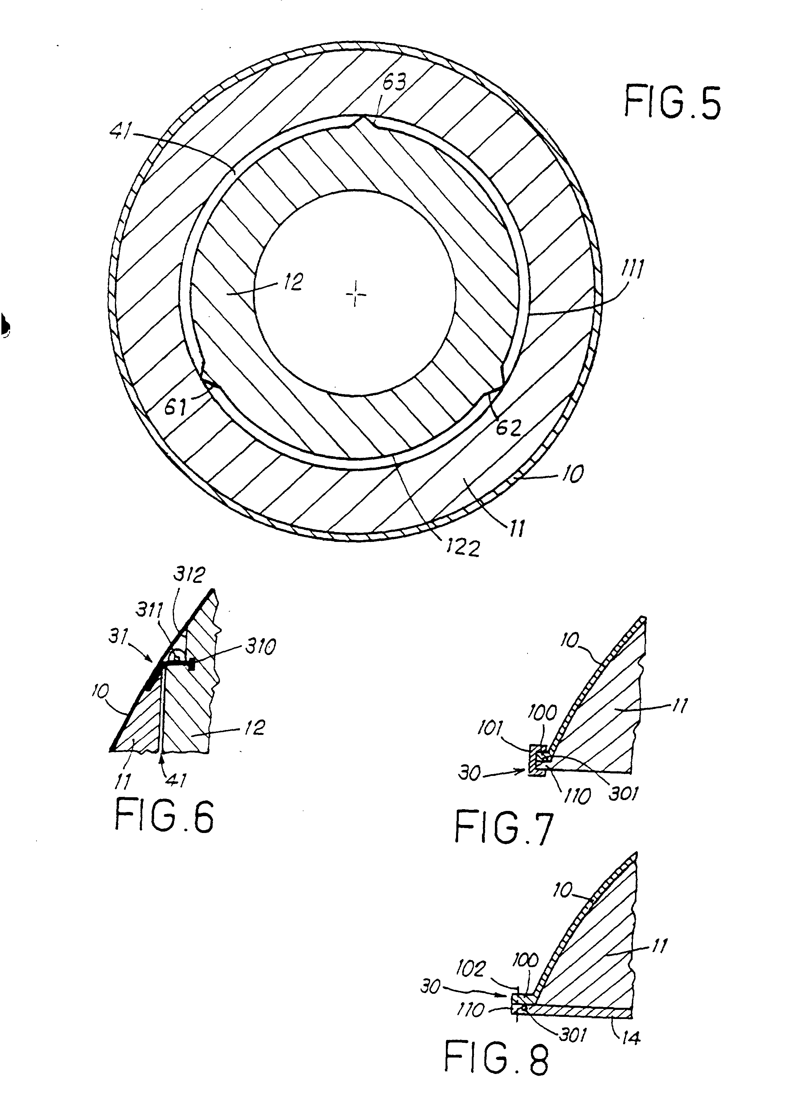

Pour éviter tout risque de coincement lors de l'éjection d'un insert, les inserts 11, 12, de même que les inserts 12, 13, sont séparés l'un de l'autre par un jeu annulaire 41. Ce jeu permet de prendre en compte d'éventuelles déformations des inserts 11, 12, 13 sous l'action de la chaleur dégagée par les gaz chauds ou de la pression, la paroi interne 111 de l'insert 11 pouvant par exemple se déformer. Le guidage de l'insert interne 12 lors de son éjection peut être réalisé au moyen d'un ensemble d'au moins trois glissières longitudinales 61, 62, 63 en forme de nervures, par exemple de section triangulaire (Figure 5). Dans la mesure où le contact entre les inserts 11 et 12 est concentré sur trois lignes de glissement, une déformation de l'une ou l'autre des parois des inserts 11, 12 situées en vis-à-vis se traduit simplement par un effet de flexion entre appuis, qui ne crée pas de coincement. Les parties mobile et statique des glissières peuvent être en matériau spécifique (par exemple PTFE) pour minimiser les frottements.

On peut noter que le divergent externe 10 n'a pas à être renforcé du fait de la présence des inserts 11, 12. En effet, la décomposition en plusieurs éléments des inserts 11, 12 combinée aux fonctions étanchéité 22 et 21 évite l'application d'un couple ou d'un effort axial prohibitif à la paroi du divergent externe 10. De plus, le ou les inserts restant en place lors de l'éjection d'un insert précédent participent au renfort du divergent.

A titre d'option, pour limiter la faible perte de rendement due à la discontinuité créée par les inserts 11, 12 lors de la phase de fonctionnement initial du lanceur au niveau du sol, si ces inserts 11 et 12 sont essentiellement cylindriques, on peut adjoindre un insert additionnel interne 13 (Figures 1 et 18) qui, comme les autres inserts 11,12, présente une symétrie de révolution mais est profilé pour définir, par sa paroi interne 131, dans une partie amont du divergent voisine du col de tuyère, un canal de passage de gaz de section évolutive s'accroissant progressivement entre le col de tuyère 2 et la paroi cylindrique interne 121 de l'insert 12 à parois cylindriques concentriques, de telle sorte que la partie amont du divergent externe 10, la paroi interne 131 de l'insert additionnel 13 et la paroi interne 121 de l'insert interne 12 cylindrique définissent une frontière qui respecte au mieux l'écoulement du jet de gaz chauds dans la première phase de fonctionnement du moteur-fusée. L'insert additionnel 13 ne s'étend que sur une fraction supérieure 121B de la paroi interne 121 de l'insert 12.

Pour rigidifier au mieux l'ensemble de la structure, la paroi externe de l'insert externe 11 présente une forme galbée qui correspond à celle du divergent externe 10 et l'insert 12, l'insert additionnel 13 ou d'autres inserts intermédiaires présentent une partie supérieure angulaire 123, 133 qui épouse également la forme du divergent externe 10.

Le nombre d'inserts principaux 11, 12, ... qui s'étendent jusqu'à la partie inférieure du divergent externe 10, peut être supérieur à deux selon le degré d'adaptation souhaité. Toutefois, ce nombre devrait rester inférieur à cinq pour conserver les avantages de la simplicité du système. Dans tous les cas, il existe un jeu entre des inserts adjacents, de même qu'entre l'insert le plus interne 12 et un éventuel insert additionnel 13 de moindre hauteur servant à optimiser la géométrie, et des glissières longitudinales telles que les glissières 61 à 63 sont réparties dans l'espace annulaire libre entre les portions cylindriques de deux inserts adjacents.

Des moyens d'étanchéité ou de limitation de pression 21, 22, 23 sont interposés entre les inserts 11, 12, 13 et le divergent externe 10 pour éviter la création d'un effort d'éjection du dispositif qui serait repris par l'extrémité inférieure 100 du divergent externe 10 et obligerait à renforcer cette extrémité 100 d'une façon trop importante qui augmenterait le coût et la masse de l'ensemble.

Dans le cas où la conduction le long de la paroi du divergent externe 10 est suffisante, c'est-à-dire si la température ne dépasse pas localement des valeurs de l'ordre de 250°C, les moyens d'étanchéité 21, 22, 23 entre la paroi du divergent externe 10 et les différents inserts 11, 12, 13 peuvent être constitués par des joints toriques élastomères 210 par exemple de type silicone (Figure 12).

A titre d'exemple, un joint de diamètre 10 mm écrasé à 25% peut absorber des déformations de l'ordre de 2 mm.

Dans le cas où l'ambiance au niveau de la paroi du divergent externe 10 est très chaude, on doit alors admettre une circulation de gaz entre les inserts 11, 12, 13 et le divergent externe 10. Dans ce cas, illustré sur la Figure 13, les éléments 21, 22, 23 peuvent être constitués par des joints métalliques élastiques 211 en forme de segments de piston qui ne sont pas parfaitement étanches mais permettent de rattraper les jeux dus aux déformations et de créer des pertes de charge qui minimisent les efforts à reprendre. Les joints 211 sont placés dans des gorges 212 formées à la périphérie des inserts 21, 22, 23.

La fonction de limitation de la pression sur la paroi du divergent externe 10 peut être réalisée de manière différente.

Ainsi, sur les Figures 9, 11, 18 et 19, on a représenté un tapis souple 56 en feutre de carbone qui permet un passage de gaz entre un insert 11, 12 ou 13 et le divergent externe 10 tout en limitant la pression. Le tapis souple 56 peut absorber les différences de déformation tout en résistant à des températures supérieures à 200°C.

La Figure 14 montre une variante de réalisation dans laquelle un tapis souple 214 réalisé par exemple en élastomère résistant thermiquement et muni de rainures 215 est interposé entre un insert tel que l'insert 12 et le divergent externe 10. Un tel tapis souple 214, qui peut être interposé entre l'ensemble des inserts 11, 12, 13 et le divergent externe 10, permet le passage des gaz dans les rainures 215 tout en limitant la pression par effet venturi.

La mise en oeuvre de la variante de la Figure 14 peut être intéressante notamment dans les cas où la tuyère met en oeuvre une réinjection de gaz chauds et un système de refroidissement de divergent du type à décharge (connu sous le nom de "dump cooling").

Le choix d'un mode particulier de dispositif de limitation de pression (tapis souple 56, tapis rainuré 214, 215, joint d'étanchéité 210 ou 211) est effectué en fonction des conditions de fonctionnement du moteur-fusée (taille, température, dilatation) et vise à garantir que seuls des efforts tolérables seront exercés sur la coque du divergent externe 10, de sorte que celle-ci peut rester mince et ne nécessite pas de renforcement pénalisant en terme de masse.

L'invention est applicable à une tuyère comprenant un divergent interne de renfort constitué d'un ensemble de plusieurs inserts éjectables 11, 12, 13, comme représenté par exemple sur la Figure 1.

L'invention s'applique toutefois également au cas d'une tuyère comportant un divergent déjà assez bien adapté à un fonctionnement au niveau du sol, par exemple avec un rapport de section ε compris entre environ 45 et 50.

Dans ce cas, il n'est pas nécessaire de mettre en oeuvre un divergent interne constitué d'une pluralité d'inserts, mais un insert unique 11, tel que représenté sur la Figure 9, réalisé de la manière décrite plus haut en référence aux Figures 9 et 18, permet d'améliorer la qualité d'un divergent externe existant 10 en réduisant les efforts latéraux et le décollement de jet, sans nécessiter de remise en cause de la structure préexistante de ce divergent externe 10.

L'insert axisymétrique unique 11 comporte un matériau alvéolaire de remplissage 51, des éléments 52 de renfort, une structure 55 de support qui peut être constituée par une plaque métallique 14 de maintien placée radialement, une paroi interne 111 en matériau réfractaire 53 résistant aux gaz chauds, une partie supérieure d'extrémité 54 également réalisée en matériau réfractaire, et des moyens de limitation de pression pouvant être constitués par exemple par un tapis souple 56 de feutre de carbone, lequel tapis peut aussi être remplacé notamment par un tapis 214 muni de rainures 215, qui facilite le décollement naturel de l'insert 11 par la pression, lorsque les moyens 30 de liaison au divergent externe 10 sont rompus.

Sur la Figure 1, on a représenté symboliquement un dispositif de fixation et de découpe pyrotechnique 32 qui permet le rattachement d'une façon sélective à la paroi du divergent externe 10, de l'insert additionnel 13. Le dispositif 32 est disposé au niveau de la zone la plus basse de la partie voisine du divergent externe 10. De la même manière, un dispositif de fixation et de découpe pyrotechnique 31 est disposé au niveau de la zone la plus basse de la partie de l'insert 12 qui est voisine du divergent externe 10. Enfin, l'insert externe 11 est rattaché, au niveau d'une bride 110 formée à sa partie périphérique externe inférieure, à une bride complémentaire 100 formée à la partie périphérique inférieure du divergent externe 10.

Les Figures 7 et 8 montrent respectivement deux variantes de dispositifs 30 de fixation et de découpe pyrotechnique de l'insert externe 11 et de l'extrémité 110 de son socle 14 par rapport au divergent externe 10. Ainsi, selon le mode de réalisation particulier de la Figure 7, les brides 100, 110 sont retenues assemblées par deux demi-agrafes 101 écartées radialement qui présentent une section en forme de cavalier. Il y a la possibilité soit d'écarter les deux demi-agrafes par des boulons pyrotechniques 103, 104 soit d'interposer entre les deux brides 100, 110 un cordeau de découpe et d'éjection pyrotechnique 301.

Selon le mode particulier de réalisation de la Figure 8, la bride 100, et la bride 110 qui constitue l'extrémité d'une plaque de maintien 14 de l'insert 11, sont maintenues solidaires par des moyens de liaison 102 classiques tels que des boulons, et un cordeau pyrotechnique circonférentiel 301 interposé entre les brides 100, 110 permet de la même façon une séparation de l'insert 11 à l'instant prédéterminé auquel le moteur-fusée a atteint une altitude suffisante.

La Figure 6 montre un exemple de réalisation du dispositif 31 de fixation et de découpe de l'insert interne 12. Cet exemple peut s'appliquer aussi au dispositif 32 de fixation et de découpe de l'insert additionnel 13. Un organe 310 de liaison métallique relie le divergent externe 10 à l'insert 12. L'organe de liaison 310 est ancré dans l'insert 12 dans la zone inférieure de la partie de l'insert 12 qui jouxte le divergent externe 10. Une entaille annulaire extérieure 312 ménageant un épaulement sur lequel repose l'organe 310 de liaison métallique est formée dans la partie périphérique de l'insert 11 pour permettre le logement d'un cordeau de découpe pyrotechnique.

Les Figures 3 et 4 montrent le processus d'éjection de l'insert 12 (l'insert additionnel 13, s'il existe comme sur la Figure 1, ayant été éjecté auparavant selon un processus similaire).

Dans une première étape (Figure 3), une fois que l'ordre d'éjection de l'insert 12 a été donné par une commande électrique, le cordeau pyrotechnique de découpe 311 est mis à feu et provoque, d'une part, la rupture de l'organe de liaison métallique 310 et, d'autre part, un effet de réaction qui initialise le mouvement d'éjection de l'insert 12 en provoquant un décollement du joint 22 disposé entre l'insert 12 et le divergent externe 10. Après le décollement du joint 22, il se produit une pressurisation sur la face supérieure 123 essentiellement tronconique de l'insert 12 et ce dernier est éjecté de façon naturelle par la pression amont. L'insert 12 est guidé dans son mouvement d'éjection par les glissières 61, 62, 63 (Figure 5).

Comme cela a été mentionné plus haut, les inserts élémentaires 13, 12, 11 sont éjectés en cascade à partir de l'insert le plus interne (insert 13 de la Figure 1 ou insert 12 de la Figure 2) quand le lanceur a atteint une certaine altitude. Le déclenchement peut s'effectuer à l'aide d'une seule commande électrique, des relais pyrotechniques assurant l'échelonnement dans le temps des mises à feu des dispositifs 32, 31, 30 et, par suite, des éjections des inserts 13, 12 et 11.

Les dimensions, le nombre et la forme des inserts sont à adapter aux différents types de besoins.

A titre d'exemple, dans une réalisation à trois inserts 11, 12, 13 selon la Figure 1, appliquée à un divergent externe 10 présentant un rayon Re de 1350 mm conférant un rapport de section ε = 97, la hauteur totale H des inserts 11 à 13 peut être supérieure ou égale à 1500 mm, et les inserts 11, 12 à emboîtement cylindrique peuvent présenter un rayon interne Ri de 860 mm conférant un rapport de section ε = 40 au début de la mission lorsque tous les inserts 11 à 13 sont en place. Dans ce cas, entre le début et la fin de la mission, le rapport de section peut varier de façon étagée entre 40 et 97 ce qui permet d'optimiser le fonctionnement.

La tuyère à inserts concentriques conforme à l'invention peut être réalisée selon un grand nombre de modes de réalisation différents.

Les Figures 9 et 10 montrent, dans le cas d'un insert unique 11, des moyens de liaison 30 qui constituent une combinaison des moyens représentés sur les Figures 7 et 8. Ainsi, l'extrémité de la plaque de maintien 14 constitue une bride 110 qui, avec la bride 100 du divergent externe 10, est insérée dans deux demi-agrafes 101 qui présentent une section en forme de cavalier. La Figure 10 montre les extrémités 105, 106 des demi-agrafes 101 qui sont réunies par des boulons explosifs 103, 104. Une telle structure s'adapte facilement à des divergents externes 10 existants. Lorsque l'insert 11 doit être éjecté, les boulons explosifs 103, 104 sont mis à feu et permettent l'éjection radiale des demi-agrafes 101. Le cordeau pyrotechnique circonférentiel 301 interposé entre les brides 100, 110 permet la découpe de la plaque de maintien 14, ce qui libère l'insert 11 qui est décollé et expulsé naturellement par la pression amont. La mise en oeuvre d'un tapis souple rainuré 214, 215 entre l'insert 11 et le divergent externe 10 peut faciliter le décollement de cet insert 11, ce qui évite l'utilisation du cordeau 301.

La Figure 11 montre une autre variante de réalisation des Figures 7 et 8, dans laquelle la bride 100 et l'extrémité 110 de la plaque de maintien 14 ou semelle sont reliées par des boulons pyrotechniques 302 qui se substituent aux demi-agrafes 101 et au cordeau 301 de la Figure 7 ou aux boulons 102 et au cordeau 301 de la Figure 8.

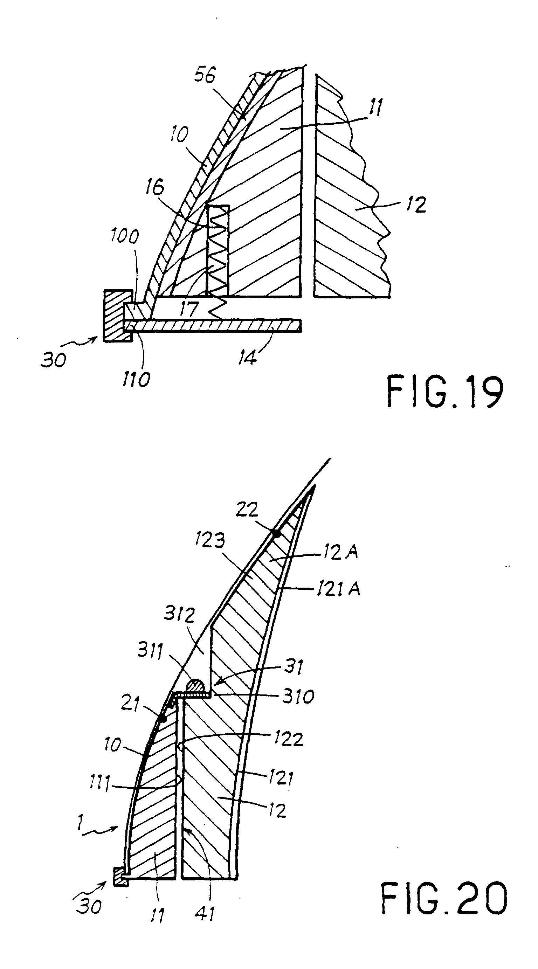

La Figure 19 montre la mise en oeuvre d'un système de rattrapage de déformation d'un insert 11 dans le cas où un tapis souple 56 limiteur de pression ne suffirait pas à absorber les déformations entre l'insert 11 et le divergent externe 10. Le système de rattrapage de déformations comprend des ressorts 16 répartis sur la circonférence de l'insert 11 et disposés dans des logements 17 formés dans cet insert 11. Les ressorts 16 qui s'appuient sur la plaque de maintien 14 garantissent que l'insert 11 restera toujours plaqué sur la coque du divergent externe 10 quelles que soient les déformations de l'insert 11 ou du divergent externe 10.

On a représenté sur la Figure 20 un mode de réalisation voisin de celui des Figures 3 et 4 mais avec un insert interne 12 comportant une paroi interne 121 profilée définissant une partie supérieure 121A de raccordement au col de la tuyère, de sorte qu'il n'est pas mis en oeuvre d'insert interne additionnel 13 et que l'insert interne 12 peut descendre jusqu'au niveau de la base du divergent 10.

On a représenté sur les Figures 15 à 17 divers modes de réalisation dans lesquels les dispositifs de séparation des inserts 11, 12 et d'éjection de ceux-ci sont découplés, contrairement au cas d'un mode de réalisation tel que celui de la Figure 6 où les deux fonctions sont localisées au même endroit.

Sur la Figure 15, on voit une charge pyrotechnique 324 disposée dans une cavité 325 ménagée dans l'insert 12 au voisinage de la paroi du divergent externe 10. La charge d'éjection 324 est choisie de manière à générer des gaz pas trop chauds dont la fonction est de décoller l'insert 12 du divergent externe 10, les gaz de combustion s'infiltrant entre le divergent externe 10 et l'insert 12 et permettant une éjection de cet insert 12 une fois que celui-ci a été séparé de l'insert 11 par la rupture des boulons pyrotechniques radiaux 313 qui relient l'insert 12 à l'insert 11.

La Figure 16 montre un mode de réalisation dans lequel une charge pyrotechnique 324 peut être disposée dans une cavité 325 ménagée dans l'insert 12, comme dans le cas du mode de réalisation de la Figure 15, pour assurer l'éjection de l'insert 12. Sur la Figure 16, on voit un insert 11 reposant sur une plaque de maintien 14 dont l'extrémité 110 est reliée à la bride périphérique 100 du divergent externe 10 par des boulons pyrotechniques, comme illustré également sur la Figure 11. L'insert 12 n'est lui-même pas relié directement à l'insert 11 par des boulons pyrotechniques comme selon la Figure 15, mais repose sur une plaque métallique de maintien 15 qui se prolonge sous l'insert 11 et est réunie à celui-ci par des boulons pyrotechniques 303 qui assurent la fonction de séparation de l'insert 12.

La Figure 17 montre un volet escamotable 421 qui, au repos, est en position relevée parallèlement à l'axe du divergent, contre l'action de ressorts 423, et se trouve maintenu en position par des moyens 422 de liaison entre l'insert 12 et l'insert 11. Lorsque les moyens de liaison 422 sont libérés par une action pyrotechnique, les ressorts 423 permettent un déploiement du volet 421 qui vient en position 421' où il se projette en saillie transversalement dans le jet des gaz chauds issus de la chambre de combustion et facilite ainsi l'extraction de l'insert 12.

D'une manière générale, il est possible de combiner les uns avec les autres différents modes de réalisation décrits plus haut. Par ailleurs, dans certains cas, on peut désoptimiser volontairement le profil du divergent pour limiter la longueur totale de celui-ci, qui pose des problèmes mécaniques, car la grande inertie en porte-à-faux oblige à renforcer les vérins de commande d'orientation ou les structures de la chambre de combustion. On obtient alors un divergent plus compact dont le rapport de section peut être accru pour compenser la perte de rendement due à la désoptimisation du profil. Dans tous les cas, l'utilisation d'inserts conformément à l'invention permet d'améliorer la tenue mécanique et les performances. Par ailleurs, l'utilisation d'inserts concentriques de forme tubulaire et en matériau alvéolaire permet de calculer facilement les caractéristiques de ceux-ci et peut constituer un système modulaire définissable sans refaire pour chaque divergent une étude d'ensemble.

## Revendications

1. Tuyère de moteur-fusée, en particulier pour premier étage de lanceur, comprenant une partie convergente (3) recevant les gaz chauds produits dans une chambre de combustion (4), un col de tuyère (2) de section réduite (So) et un divergent (1) raccordé au col de tuyère (2) et se terminant à sa partie aval (101) par une section de sortie des gaz (Se) définissant un rapport de section (ε = Se/So) élevé, le divergent (1) comprenant un divergent externe (10) relié au col de tuyère (2) et au moins un divergent interne (11,12,13) dont la section de sortie est inférieure à celle du divergent externe (10) et qui est emboîté dans le divergent externe (10) et connecté à celui-ci par des moyens de liaison (30, 31 32) associés à des moyens de destruction sélective desdits moyens de liaison pour permettre une séparation et un largage du divergent interne (11, 12, 13) à un instant prédéterminé du fonctionnement de la chambre de combustion correspondant à une altitude prédéterminée du moteur-fusée, le divergent interne comprenant au moins un premier insert (11) disposé à l'intérieur du divergent externe (10) de façon concentrique à celui-ci et de manière à rigidifier le divergent externe (10) lors des phases transitoires de démarrage ou d'éjection du divergent interne, **caractérisé en ce que** ledit premier insert (11) comprend un matériau alvéolaire de remplissage (51) associé à une structure de rigidification (52,55) et à un matériau réfractaire (53) définissant la paroi interne (111) dudit premier insert (11) soumise aux gaz chauds produits dans la chambre de combustion, de telle sorte que la densité moyenne dudit premier insert (11) soit comprise entre environ 0,2 et 0,4, **en ce que** des moyens de limitation de pression (21), sont interposés entre ledit premier insert (11) et le divergent externe (10) pour limiter les efforts transmis au divergent externe (10) et **en ce que** ledit premier insert (11) est fixé au divergent externe (10) par des moyens de fixation rigides (30) associés à des moyens de découpe sélective (311).

2. Tuyère selon la revendication 1, **caractérisée en ce que** le premier insert (11) comprend une paroi interne (111) cylindrique.

3. Tuyère selon la revendication 1, **caractérisée en ce que** le premier insert interne (11) comprend une paroi interne (111) profilée.

4. Tuyère selon la revendication 1, **caractérisée en ce que** le divergent interne comprend un ensemble de plusieurs inserts concentriques éjectables (11,12), chaque insert (11,12) comprenant un matériau alvéolaire de remplissage (51) associé à une structure de rigidification (52, 55) et à un matériau réfractaire (53) définissant la paroi interne (111, 121) de chaque insert (11, 12) soumise aux gaz chauds produits dans la chambre de combustion, de telle sorte que la densité moyenne de chaque insert (11, 12) soit comprise entre environ 0,2 et 0,4, **en ce que** les différents inserts (11, 12) sont reliés entre eux par des moyens de fixation rigides (31) associés à des moyens de découpe sélective (311), **en ce que** des moyens de limitation de pression (21, 22) sont interposés entre chaque insert (11, 12) et le divergent externe (10) pour limiter les efforts transmis au divergent externe (10) et **en ce que** les parois en regard l'une de l'autre de deux inserts concentriques adjacents (11,12) comportent des portions essentiellement cylindriques (111, 122) qui sont séparées l'une de l'autre par un jeu annulaire (41) dans lequel sont disposées au moins trois glissières longitudinales (61, 62, 63) permettant un glissement de l'insert (12) interne par rapport à l'insert (11) externe adjacent sans risque de coincement.

5. Tuyère selon la revendication 4, **caractérisée en ce que** chacun des inserts concentriques éjectables (11,12) présente une paroi interne essentiellement cylindrique.

6. Tuyère selon la revendication 4 ou la revendication 5, **caractérisée en ce que** le divergent interne comprend en outre un insert auxiliaire (13) qui est concentrique à l'insert le plus interne (12), est disposé à l'intérieur de cet insert le plus interne (12) en étant relié à celui-ci par des moyens de fixation rigides (32) associés à des moyens de découpe sélective, **en ce que** l'insert auxiliaire (13) comprend un matériau alvéolaire de remplissage (51) associé à une structure de rigidification (52, 55) et à un matériau réfractaire (53) définissant la paroi interne profilée (131) de l'insert auxiliaire (13) soumise aux gaz chauds produits dans la chambre de combustion, de telle sorte que la densité moyenne de l'insert auxiliaire (13) soit comprise entre environ 0,2 et 0,4, **en ce que** des moyens de limitation de pression (23) sont interposés entre l'insert auxiliaire (13) et le divergent externe (10), **en ce que** les parois en regard l'une de l'autre de l'insert le plus interne (12) et de l'insert auxiliaire (13) comportent des portions essentiellement cylindriques (121,132) qui sont séparées l'une de l'autre par un jeu annulaire dans lequel sont disposées au moins trois glissières longitudinales (61, 62, 63) permettant un glissement de l'insert auxiliaire (13) par rapport à l'insert le plus interne (12) sans risque de coincement, et **en ce que** l'insert auxiliaire (13) ne s'étend que sur une fraction supérieure (121B) de la paroi interne (121) de l'insert le plus interne (12).

7. Tuyère selon l'une quelconque des revendications 1 à 6, **caractérisée en ce que** les moyens de limitation de pression (21, 22, 23) comprennent un tapis (56) de feutre de carbone permettant d'absorber les déformations radiales du divergent externe (10) et du divergent interne en fonctionnement.

8. Tuyère selon l'une quelconque des revendications 1 à 6, **caractérisée en ce que** les moyens de limitation de pression (21, 22, 23) comprennent un tapis élastomère (214) souple muni de rainures (215) sur sa face tournée vers le divergent externe (10).

9. Tuyère selon l'une quelconque des revendications 1 à 6, **caractérisée en ce que** les moyens de limitation de pression (21, 22, 23) comprennent au moins un joint torique élastomère (210) de type silicone.

10. Tuyère selon l'une quelconque des revendications 1 à 6, **caractérisée en ce que** les moyens de limitation de pression (21, 22, 23) comprennent des joints (211) en forme de segments de piston partiellement étanches pour créer des pertes de charge et assurer un rattrapage de jeu.

11. Tuyère selon l'une quelconque des revendications 1 à 10, **caractérisée en ce que** le matériau alvéolaire de remplissage (51) comprend des matériaux composites présentant une structure alvéolaire en nid d'abeille ou sous la forme d'une résine chargée de microballons.

12. Tuyère selon l'une quelconque des revendications 1 à 11, **caractérisée en ce que** le matériau réfractaire (53) comprend un matériau choisi parmi la silice phénolique, le carbone phénolique, un composite carbone-carbone et un composite carbone-carbure de silicium, en fonction de la durée d'exposition aux gaz chauds produits dans la chambre de combustion.

13. Tuyère selon l'une quelconque des revendications 1 à 12, **caractérisée en ce que** le premier insert (11) présente à sa partie inférieure une plaque rigide (14) définissant une bride périphérique (110) de raccordement à une bride correspondante (100) réalisée à la partie périphérique inférieure du divergent externe (10) et **en ce que** des moyens pyrotechniques (301) sont prévus pour provoquer de façon sélective la rupture des moyens de liaison (101, 102) desdites brides (110, 100).

14. Tuyère selon l'une quelconque des revendications 4 à 6, **caractérisée en ce qu'**elle comprend des moyens de commande électrique centralisés pour déclencher lesdits moyens de découpe sélective et des relais pyrotechniques temporisateurs associés auxdits moyens de découpe sélective pour provoquer l'éjection en cascade des inserts (11,12,13) à partir de l'insert le plus interne (12) ou, le cas échéant, de l'insert auxiliaire (13).

15. Tuyère selon l'une quelconque des revendications 4 à 6, **caractérisée en ce que** des moyens de liaison (30, 31, 32) comprennent des vis explosives à charges pyrotechniques (313) reliant entre eux des inserts adjacents (11, 12).

16. Tuyère selon l'une quelconque des revendications 4 à 6, **caractérisée en ce que** certains au moins des moyens de liaison (30, 31, 32) associés à des moyens de destruction sélective desdits moyens de liaison comprennent des charges pyrotechniques (324) disposées dans des cavités (325) ménagées dans les inserts (11, 12) au voisinage du divergent externe (10) pour générer des gaz de chaleur modérée pour assurer, lors de leur mise à feu, un décollement des inserts (11, 12) par rapport au divergent externe (10).

17. Tuyère selon l'une quelconque des revendications 4 à 6, **caractérisée en ce qu'**au moins un insert (12) comprend un moyen escamotable (421) dont le déploiement est assuré pyrotechniquement ou par des ressorts (422) libérés par l'intermédiaire de dispositifs de séparation pyrotechniques, de telle sorte que le moyen escamotable (421) puisse se projeter sélectivement en saillie transversalement dans le jet desdits gaz chauds issus de la chambre de combustion lors de l'éjection de cet insert (12) de manière à faciliter l'extraction de celui-ci.

## Claims

1. A rocket engine nozzle, in particular for the first stage of a launcher, the nozzle comprising a converging part (3) receiving hot gas produced in a combustion chamber (4), a nozzle throat (2) of small section (So), and a diverging part (1) connected to the nozzle throat (2) and terminating at its downstream end (101) by a gas outlet section (Se) defining a high section ratio (ε = Se/So), the diverging part (1) comprising an outer diverging part (10) connected to the nozzle throat (2) and at least one inner diverging part (11, 12, 13) of outlet section that is smaller than that of the outer diverging part (10) and engaged in the outer diverging part (10) and connected thereto by link means (30, 31, 32) associated with means for selectively destroying said link means to enable the inner diverging part (11, 12, 13) to be separated and expelled at a predetermined instant in the operation of the combustion chamber, corresponding to a predetermined altitude of the rocket engine, the inner diverging part including at least a first insert (11) disposed inside the outer diverging part (10) so as to be concentric therewith and so as to stiffen the outer diverging part (10) during transient stages of starting or of ejecting the inner diverging part, **characterised in that** said first insert (11) comprises a cellular filling material (51) associated with a stiffening structure (52, 55) and with a refractory material (53) defining the inner wall (111) of said first insert (11) which is subjected to the hot gas produced in the combustion chamber, such that the mean specific gravity of said first insert (11) lies in the range about 0.2 to about 0.4, **in that** pressure-limiting means (21) are interposed between said first insert (11) and the outer diverging part (10) to limit the forces transmitted to the outer diverging part (10), and **in that** said first insert (11) is fixed to the outer diverging part (10) by rigid fixing means (30) associated with selective cutting-off means (311).

2. A nozzle according to claim 1, **characterised in that** the first insert (11) comprises a cylindrical inner wall (111).

3. A nozzle according to claim 1, **characterised in that** the first insert (11) comprises a streamlined inner wall (111).

4. A nozzle according to claim 1, **characterised in that** the inner diverging part comprises a set of a plurality of concentric ejectable inserts (11, 12), each insert (11, 12) comprising a cellular filling material (51) associated with a stiffening structure (52, 55) and with a refractory material (53) defining the inner wall (111, 121) of each insert (11, 12) that is subjected to the hot gas produced in the combustion chamber, such that the mean specific gravity of each insert (11, 12) lies in the range about 0.2 to about 0.4, **in that** the various inserts (11, 12) are connected to one another by rigid fixing means (31) associated with selective cutting-off means (311), **in that** pressure-limiting means (21, 22) are interposed between each insert (11, 12) and the outer diverging part (10) to limit the forces transmitted to the outer diverging part (10), and **in that** the facing walls of two adjacent concentric inserts (11, 12) include essentially cylindrical portions (111, 122) which are spaced apart from each other by annular clearance (41) in which at least three longitudinal slideways (61, 62, 63) are disposed, enabling the inner insert (12) to slide relative to the adjacent outer insert (11) without any risk of jamming.

5. A nozzle according to claim 4, **characterised in that** each of the ejectable concentric inserts (11, 12) has an inside wall that is essentially cylindrical.

6. A nozzle according to claim 4 or claim 5, **characterised in that** the inner diverging part further comprises an auxiliary insert (13) concentric with the innermost insert (12) and disposed inside said innermost insert (12), being connected thereto by rigid fixing means (32) associated with selective cutting-off means, **in that** the auxiliary insert (13) comprises a cellular filling material (51) associated with a stiffening structure (52, 55) and with a refractory material (53) defining the streamlined inner wall (131) of the auxiliary insert (13) which is subjected to the hot gas produced in the combustion chamber, such that the mean specific gravity of the auxiliary insert (13) lies in the range about 0.2 to about 0.4, **in that** pressure-limiting means (23) are interposed between the auxiliary insert (13) and the outer diverging part (10), **in that** the facing walls of the innermost insert (12) and of the auxiliary insert (13) include essentially cylindrical portions (121, 132) spaced apart from each other by annular clearance in which there are disposed at least three longitudinal slideways (61, 62, 63) enabling the auxiliary insert (13) to slide relative to the innermost insert (12) without any risk of jamming, and **in that** the auxiliary insert (13) extends over only an upper fraction (121B) of the inner wall (121) of the innermost insert (12).

7. A nozzle according to any one of claims 1 to 6, **characterised in that** the pressure-limiting means (21, 22, 23) comprise a carbon felt mat (56) capable, in operation, of accommodating radial deformation between the outer diverging part (10) and the inner diverging part.

8. A nozzle according to any one of claims 1 to 6, **characterised in that** the pressure-limiting means (21, 22, 23) comprise a flexible elastomer mat (214) provided with grooves (215) on its face facing the outer diverging part (10).

9. A nozzle according to any one of claims 1 to 6, **characterised in that** the pressure-limiting means (21, 22, 23) comprise at least one silicone type elastomer O-ring (210).

10. A nozzle according to any one of claims 1 to 6, **characterised in that** the pressure-limiting means (21, 22, 23) comprise gaskets (211) in the form of piston rings that are only partially leakproof, so as to create headlosses and take up clearance.

11. A nozzle according to any one of claims 1 to 10, **characterised in that** the cellular filling material (51) comprises composite materials of cellular honeycomb structure or in the form of a resin filled with microspheres.

12. A nozzle according to any one of claims 1 to 11, **characterised in that** the refractory material (53) comprises a material selected from phenolic silica, a carbon-carbon composite, and a carbon-silicon carbide composite, as a function of the duration of exposure to the hot gas produced in the combustion chamber.

13. A nozzle according to any one of claims 1 to 12, **characterised in that** the bottom portion of the first insert (11) has a rigid plate (14) defining a peripheral flange (110) for coupling to a corresponding flange (100) formed at the bottom peripheral portion of the outer diverging part (10), and **in that** pyrotechnic means (301) are provided to cause link means (101, 102) between said flanges (110, 100) to break selectively.

14. A nozzle according to any one of claims 4 to 6, **characterised in that** it includes centralized electrical control means for triggering said selective cutting-off means, and timing pyrotechnic fuses associated with said selective cutting-off means to cause the inserts (11, 12, 13) to be ejected in cascade starting from the innermost insert (12) or, where appropriate, from the auxiliary insert (13).

15. A nozzle according to any one of claims 4 to 6, **characterised in that** link means (30, 31, 32) comprise explosive screws having pyrotechnic charges (313) interconnecting adjacent pairs of inserts (11, 12).

16. A nozzle according to any one of claims 4 to 6, **characterised in that** at least some link means (30, 31, 32) associated with means for selectively destroying said link means include pyrotechnic charges (324) disposed in cavities (325) formed in the inserts (11, 12) in the vicinity of the outer diverging part (10) to generate gas of moderate temperature serving, on firing of the link means, to lift the inserts (11, 12) off the outer diverging part (10).

17. A nozzle according to any one of claims 4 to 6, **characterised in that** at least one insert (12) includes retractable means (421) deployed pyrotechnically or by springs (422) released by pyrotechnic separation devices, such that the retractable means (421) can be caused selectively to project transversely into said hot gas jet from the combustion chamber while ejecting the insert (12) so as to facilitate extraction thereof.

## Patentansprüche

1. Raketendüse, insbesondere für die erste Trägerstufe, aufweisend einen konvergenten Teil (3), der die in einer Brennkammer (4) erzeugten heißen Gase aufnimmt, einen Düsenhals (2) mit verringertem Querschnitt (So) und eine Expansionsdüse (1), die sich an den Düsenhals (2) anschließt und an ihrem Niederdruck-seitigen Bereich (101) mit einem Gasaustrittsquerschnitt (Se), der ein erhöhtes Querschnittsverhältnis (ε = Se/So) definiert, endet, wobei die Expansionsdüse (1) eine äußere Expansionsdüse (10), die mit dem Düsenhals (2) verbunden ist, und mindestens eine innere Expansionsdüse (11, 12, 13), deren Austrittsquerschnitt kleiner ist als derjenige der äußeren Expansionsdüse (10) und die in die äußere Expansionsdüse (10) eingefügt ist und mit dieser verbunden ist durch Verbindungsmittel (30, 31, 32), denen Mittel zur selektiven Zerstörung der Verbindungsmittel beigeordnet sind, um eine Abtrennung und einen Abwurf der inneren Expansionsdüse (11, 12, 13) zu einem vorbestimmten Betriebszeitpunkt der Brennkammer, der einer vorbestimmten Höhe der Rakete entspricht, zu erlauben, aufweist, wobei die Expansionsdüse mindestens einen ersten Einsatz (11), der im Inneren der äußeren Expansionsdüse (10) in zu ihr konzentrischer Weise und dergestalt angebracht ist, dass er die äußere Expansionsdüse (10) während der Übergangsphasen des Anlaufens oder des Ausstoßes der inneren Expansionsdüse versteift, aufweist,
**dadurch gekennzeichnet, dass** der erste Einsatz (11) ein zelliges Füllmaterial (51), dem eine Versteifungsstruktur (52, 55) und ein hitzebeständiges Material (53), das die Innenwand (111) des ersten Einsatzes (11), die den in der Brennkammer erzeugten heißen Gasen ausgesetzt ist, beigeordnet sind, dergestalt, dass die mittlere Dichte des ersten Einsatzes (11) zwischen etwa 0,2 und 0,4 liegt, aufweist, und dadurch, dass Druckbegrenzungsmittel (21) zwischen den ersten Einsatz (11) und die äußere Expansionsdüse (10) eingefügt sind, um die auf die äußere Expansionsdüse (10) übertragenen Belastungskräfte zu begrenzen, und dadurch, dass der erste Einsatz (11) an der äußeren Expansionsdüse (10) durch steife Befestigungsmittel (30), denen Mittel zum selektiven Abtrennen (311) beigeordnet sind, befestigt ist.

2. Düse nach Anspruch 1,
**dadurch gekennzeichnet, dass** der ersten Einsatz (11) eine zylindrische Innenwand (111) aufweist.

3. Düse nach Anspruch 1,
**dadurch gekennzeichnet, dass** der erste Einsatz (11) eine profilierte Innenwand (111) aufweist.

4. Düse nach Anspruch 1,
**dadurch gekennzeichnet, dass** die innere Expansionsdüse einen Satz von mehreren ausstoßbaren konzentrischen Einsätzen (11, 12) aufweist, wobei jeder Einsatz (11, 12) ein zelliges Füllmaterial (51), dem eine Versteifungsstruktur (52, 55) und ein hitzebeständiges Material (53), das die Innenwand (11, 121) jedes Einsatzes (111, 121), die den in der Brennkammer erzeugten heißen Gasen ausgesetzt ist, beigeordnet sind, dergestalt, dass die mittlere Dichte jedes Einsatzes (11, 12) zwischen etwa 0,2 und 0,4 liegt, aufweist, und dadurch, dass die verschiedenen Einsätze (11, 12) miteinander verbunden sind durch steife Befestigungsmittel (31), denen Mittel zum selektiven Abtrennen (311) beigeordnet sind, und dadurch, dass Druckbegrenzungsmittel (21, 22) zwischen jedem Einsatz (11, 12) und der äußeren Expansionsdüse (10) eingefügt sind, um die auf die äußere Expansionsdüse (10) übertragenen Belastungskräfte zu begrenzen, und dadurch, dass die einander gegenüber liegenden Wände zweier benachbarter konzentrischer Einsätze (11, 12) im Wesentlichen zylindrische Bereiche (111, 122) besitzen, die voneinander durch einen ringförmigen Spielraum (41), in dem mindestens drei Längs-Gleitschienen (61, 62, 63), die ein Gleiten des inneren Einsatzes (12) bezüglich des benachbarten äußeren Einsatzes (11) ohne Verklemmungsrisiko erlauben, angebracht sind, getrennt sind.

5. Düse nach Anspruch 4,
**dadurch gekennzeichnet, dass** jeder der ausstoßbaren konzentrischen Einsätze (11, 12) eine im Wesentlichen zylindrische Innenwand besitzt.

6. Düse nach Anspruch 4 oder Anspruch 5,
**dadurch gekennzeichnet, dass** die innere Expansionsdüse außerdem einen Hilfseinsatz (13), der mit dem innersten Einsatz (12) konzentrisch ist, der im Inneren dieses innersten Einsatzes (12) angebracht ist, indem er an diesem befestigt ist durch steife Befestigungsmittel (32), denen Mittel zum selektiven Abtrennen beigeordnet sind, aufweist, und dadurch, dass der Hilfseinsatz (13) ein zelliges Füllmaterial (51), dem.eine Versteifungsstruktur (52, 55) und ein hitzebeständiges Material (53), das die profilierte Innenwand (131) des Hilfseinsatzes (13) definiert, die den in der Brennkammer erzeugten heißen Gasen ausgesetzt ist, beigeordnet sind, dergestalt, dass die mittlere Dichte des Hilfseinsatzes (13) zwischen etwa 0,2 und 0,4 liegt, aufweist, und dadurch, dass Druckbegrenzungsmittel (23) zwischen dem Hilfseinsatz (13) und der äußeren Expansionsdüse (10) eingefügt sind, dass die einander gegenüber liegenden Wände des innersten Einsatzes (12) und des Hilfseinsatzes (13) im Wesentlichen zylindrische Bereiche (121, 132) besitzen, die voneinander durch einen ringförmigen Spielraum, in dem mindestens drei Längs-Gleitschienen (61, 62, 63) angebracht sind, die ein Gleiten des Hilfseinsatzes (13) bezüglich des innersten Einsatzes (12) ohne Verklemmungsrisiko erlauben, getrennt sind, und dadurch, dass sich der Hilfseinsatz (13) nur über einen oberen Bruchteil (121B) der Innenwand (121) des innersten Einsatzes (12) erstreckt.

7. Düse nach einem der Ansprüche 1 bis 6,
**dadurch gekennzeichnet, dass** die Druckbegrenzungsmittel (21, 22, 23) eine Kohlenstoff-Filzmatte (56) aufweisen, die es erlaubt, die radialen Verformungen der äußeren Expansionsdüse (10) und der inneren Expansionsdüse im Betrieb zu absorbieren.

8. Düse nach einem der Ansprüche 1 bis 6,
**dadurch gekennzeichnet, dass** die Druckbegrenzungsmittel (21, 22, 23) eine Matte (214) aus nachgiebigem Elastomer, die an ihrer der äußeren Expanionsdüse (10) zugewandten Seite mit Rillen (215) ausgestattet ist, aufweisen.

9. Düse nach einem der Ansprüche 1 bis 6,
**dadurch gekennzeichnet, dass** die Druckbegrenzungsmittel (21, 22, 23) mindestens eine wulstförmige elastomere Dichtung (210) vom Silicon-Typ aufweisen.

10. Düse nach einem der Ansprüche 1 bis 6,
**dadurch gekennzeichnet, dass** die Druckbegrenzungsmittel (21, 22, 23) Dichtungen (211) in Form von teilweise dichten Kolbenringen aufweisen, um Lastabbau zu erzeugen und ein Einhalten des Spiels sicherzustellen.

11. Düse nach einem der Ansprüche 1 bis 10,
**dadurch gekennzeichnet, dass** das zellige Füllmaterial (51) Verbundmaterialien, die eine zellige Wabenstruktur besitzen, oder in Form eines mit Mikroballons beladenen Harzes vorgesehen sind, aufweist.

12. Düse nach einem der Ansprüche 1 bis 11,
**dadurch gekennzeichnet, dass** das hitzebeständige Material (53) ein Material aufweist, das abhängig von der Zeitdauer, in der es den in der Brennkammer erzeugten heißen Gasen exponiert ist, ausgewählt ist aus Phenol-Kieselerde, Phenol-Kohlenstoff, einem Kohlenstoff-Kohlenstoff-Verbundmaterial und einem Kohlenstoff-Siliciumcarbid-Verbundmaterial.

13. Düse nach einem der Ansprüche 1 bis 12,
**dadurch gekennzeichnet, dass** der erste Einsatz (11) an seinem unteren Bereich eine steife Platte (14), die am Rand einen Flansch (110) zur Anfügung an einen entsprechenden Flansch (100), der am unteren Umfangsbereich der äußeren Expansionsdüse (10) ausgeführt ist, definiert, besitzt, und dadurch, dass pyrotechnische Mittel (301) vorgesehen sind, um in selektiver Weise den Bruch der Verbindungsmittel (101, 102) der Flansche (110, 100) hervorzurufen.

14. Düse nach einem der Ansprüche 4 bis 6,
**dadurch gekennzeichnet, dass** sie zentrale elektrische Betätigungsmittel zum Auslösen der Mittel zum selektiven Abtrennen, und pyrotechnische Zeitrelais, die den Mitteln zum selektiven Abtrennen beigeordnet sind, um den Kaskadenausstoß der Einsätze (11, 12, 13) ausgehend von dem innersten Einsatz (12) oder ggf. von dem Hilfseinsatz (13) hervorzurufen, aufweist.

15. Düse nach einem der Ansprüche 4 bis 6,
**dadurch gekennzeichnet, dass** Verbindungsmittel (30, 31, 32) Sprengschrauben mit pyrotechnischen Ladungen (313), die benachbarte Einsätze (11, 12) aneinander befestigen, aufweisen.

16. Düse nach einem der Ansprüche 4 bis 6,
**dadurch gekennzeichnet, dass** wenigstens gewisse der Verbindungsmittel (30, 31, 32), denen Mittel zur selektiven Zerstörung der Verbindungsmittel beigeordnet sind, pyrotechnische Ladungen (324) aufweisen, die in Hohlräumen (325), die in den Einsätzen (11, 12) der äußeren Expansionsdüse (10) benachbart vorgesehen sind, angebracht sind, um Gase mäßiger Hitze zu erzeugen, um bei ihrer Zündung ein Ablösen der Einsätze (11, 12) bezüglich der äußeren Expansionsdüse (10) sicherzustellen.

17. Düse nach einem der Ansprüche 4 bis 6,
**dadurch gekennzeichnet, dass** mindestens ein Einsatz (12) ein einklappbares Mittel (421) aufweist, dessen Ausbreitung pyrotechnisch oder durch Federn (422), die mittels pyrotechnischer Trennvorrichtungen frei gegeben werden, dergestalt sichergestellt wird, dass sich das einklappbare Mittel (421) beim Ausstoß dieses Einsatzes (12) selektiv vorspringend quer in den Strahl der aus der Brennkammer kommenden heißen Gase erstrecken kann, um das Ausbringen des Einsatzes zu erleichtern.
